# EUROPEAN PATENT SPECIFICATION

(11) **EP 0 361 099 B1**
(45) Date of publication and mention of the grant of the patent: **04.08.1993**
(21) Application number: 89115774.5
(22) Date of filing: 26.08.1989
(51) Int. Cl.: A01F 25/08, F26B 25/10

(54) **Round bale dryer**
Trockner für Rundballen
Séchoir pour balles rondes

(30) Priority: 30.08.1988 IT 4575788
(43) Date of publication of application: 04.04.1990
(73) Proprietor: Mich, Vigilio, I-39100 Bolzano (IT)
(72) Inventor: Mich, Vigilio, I-39100 Bolzano (IT)
(74) Representative: Gustorf, Gerhard, Dipl.-Ing.

(56) References cited:
- DE-A- 2 007 296
- GB-A- 1 418 071

## Description

The present invention relates to a device for drying hay bales as set forth in the preamble of claim 1. Such a device is known by DE-A 20 07 296, wherein the base of each bale rests on the corresponding opening provided with a plurality of bores distributed over nearly the whole opening surface. There is no possibility to regulate the air flow in the central part of the opening and consequently in the bales.

Many devices are known for processing hay pressed in the shape of round bales, which devices being able to dry in a rapid and economical way hay bales collected in the field by crop baling machines. Indeed, it is known that hay bales may be stored and ready for feeding cattle just after humidity of the hay is lower than 15-16%, otherwise a degrading process of the hay, as far as nourishing and organolectic substances are concerned, may occur, due to the hay fermentation. Especially for the soft-core bales, which present a lower pressure in the inside of the bales, it is sufficient to involve the bales with a quite dry (with respect to the hay) air flow, in case pre-heated before the ambient where air for the hay process is collected, for starting with a drying process of the bales. The air which enters the bale from bottom, is usually inclined to follow preferential ways, especially the central way in the soft-core bales, i.e. the axial way with reference to the cylindrical shape of the bale. Particular expediants are carried, particularly the expedient of a cover, which is placed on the top of the bale and which is provided with an edge around said cover, in such a way that the air is obliged to follow a way, which, especially in correspondence of the top of the bale, involves also the external part of the bale, obtaining a substantially uniform drying process of all the bale. This problem is particularly important, because, if the drying process is uniform in all the bale, time is shorter for a completion of said process, but, consequently, also a cost reduction is obtained, especially energy costs referred to the fan and heat exchanger for the drying air. It is not to be disregarded that, with an optimal device as far as an homogeneous drying process of all the bale to be dried is obtained, also the device manufacturing costs are decreased, either because the dried bale production is increased under the same conditions, or dimensions can be reduced, with the same bale production.

The technical problem which the device according to the invention intends to solve is to allow the drying process to involve in an homogeneous way the hay placed in any part of the bale, particularly the hay which is arranged in correspondence of the middle-external part of the bale, i.e. in the middle part between the bottom and the top of the bale. Indeed, experiences suggest that the bottom of the bale is well dried, also in absence of particular expedients. It is sufficient that the supporting surface on the circular opening of the frame is airtight, in such a way that air cannot escape from the bottom. At contrary, as far as the top is concerned, it could be sufficient to use a cover, in case provided with an edge. The critical part of the bale is always the external middle-high of the bale.

This problem is solved by the device according to the invention, set forth in the charcterizing part of claim 1.

These and further features will be apparent from the following description and in enclosed drawings, where:
Figure 1 represents a perspective view of the device according to the invention;
Figure 2 represents a plan view of the same device, on which some bales of hay were arranged;
Figure 3 represents a sectional view, according to the line A-A of Figure 2;
Figure 4 represents a sectional view according to the line B-B of Figure 2;
Figure 5 represents a sectional view according to the line C-C of Figure 2;
Figure 6 represents a sectional view according to the line D-D of Figure 2;
Figure 7 represents a sectional view according to the line E-E of Figure 2;
Figure 8 represents, with its articulations into 8a, 8b, 8c three differents embodiments of a particular of the device according to the invention.

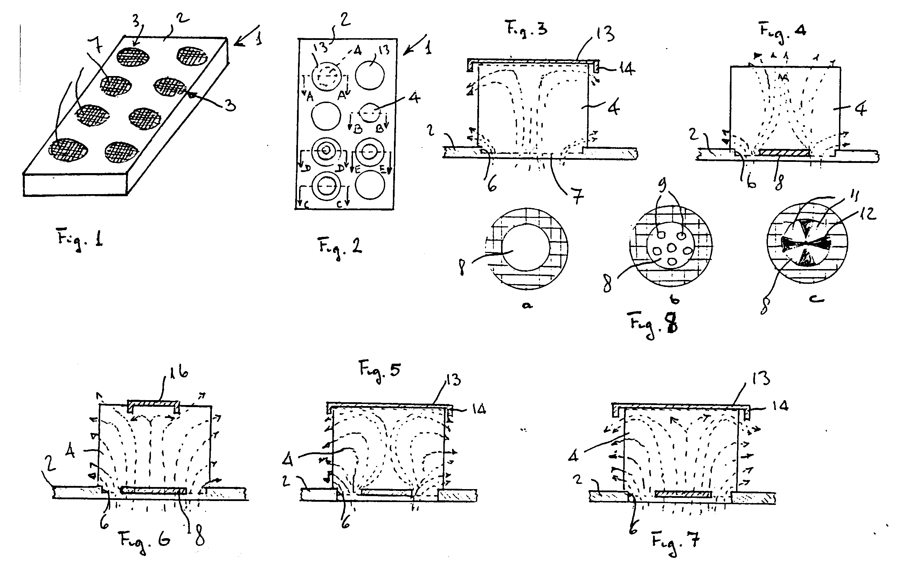

The device according to the invention comprises an ambient 1 for the collection of the drying air, which is processed, before this ambient, by an heat-exchenger and by a fan, non represented in the drawings. The ambient 1 (Figg.1 and 2) comprises a surface 2, which represents supporting means of the device according to the invention. On said surface 2 a plurality of bales 4 of hay are adapted to be arranged, in corrispondence of the same number of openings 3. Fig.2 represents a plurality of bales 4, each one provided with particulars, which will be expained forward. It is known that the humidity of the hay collected in the field may arrive till 50-60% whereas its optimal value for storing hay to be used as cattle food, should usually be comprised between 15 and 16%. otherwise a degrading process, due to the hay fermentation, may occur. Each opening 3 is provided with a recess 6 (Fig.3); its height is limited, with respect to the plan of the surface 2, by a grid 7 (Fig.1), which has two main functions: the first one is to allow a tractor to de be driven free on the surface 2 in order to load on and to unload from the hay bales 4; the second one is to allow a bale 4 to stop, with its internal part of bottom, on the same grid and with its external part of bottom on the surface 2, obtaining in such a way an air tight result, like it will be explained forward. On the grid 7 a substantially plate 8 (Fig. 8a) may be arranged, which may be quite full, or provide with holes 9 (Fig.8b), or with sectors 11 (Fig.8c). The diameter of the plate 8 may be equal to half of diameter of opening 3, which is usually 120 cm. Diameter of the plate 8 is therefore 50-60 cm. Plate 8 represents interdiction means of the device according to the invention. Said dimensions are depending on dimensions of the bale bottom; its standard is usually comprised between 150 and 165 cm. In Fig.8c, the plate is practically made of two plates, one of them lower and connected to the grid 7 and the second adapted to rotate with respect the the fixed plate, so that it is possible to adjust, with said rotation, the width of sectors 11. On the top of the bale 4 a cover 13 may be arranged. Cover 13 is circular and its dimensions are a bit bigger than diameter of the bale top. For instance, its diamater might be 170-180 cm. in the case of bale diamater 150 cm. Cover 13 may be provided with an edge 14, all around the cover 13. Height of the edge 14 may be substantially equal to 0,1 diamater of cover 13, i.d. 17-18 cm. Cover 13 and edge 14 make the airf flow deviate, in order to involve a bigger quantity of hay. Instead of cover 13 with edhe 14, a cover 16 (Fig.6) may be useful to be arranged. Its shape is always circular, but its diameter may be lower that top diameter of the bale, substantially comprised between 90 and 120 cm. if the bale has a diameter 150 cm. Cover 16 may be provided with an edge 17, all around the cover 17 and having a height comprised between 5 and 8 cm.

It' well known that the most crop baling machines working at present time are producing so-called "soft-core bales", with hay less pressed in the inside of the bale. Crop baling machines, which can produce "hard-core bales" are less utilized. These bales present hay more pressed in the inside than in the external part. Crop baling ma-so called "variable pressure crop baling machines" were recently introduced in the market. They are provived with a hay pressure adjustment device, which operates on the hay pressure during the tamping operation on the hay, in such a way that a result of a substantially uniform pressure of the hay in the inside of tha bale can be obtained. Therefore, the pressure in the inside of the bale is not variable,whereas it is the hay pressure adjustment device which operates in different way during the bale forming process. This type of bale is ideal, as far as the drying process is concerned: indeed the drying air, which involves a bale, is not obliged to follow preferential ways, because it is free to pass through any part of the bale, contrary to what happens in "soft-core" and "hard-core" bales. But the reason why the crop baling machines which produce "soft-core bales" call our attention, is depending on the fact that these machines are less expensive and more diffused than the other ones. Without any particular expedients, drying air which involves a "soft-core bale", is obliged to choose as preferential way which is substantially close to the cylinder axis of the bale. Consequently, two drawbacks happen: the first is that hay placed in correspondence of the side external part of the bale, may present an humidity quite higher than 15-16%, after completion of drying process; the second is that time required for completion of drying process may last more than economical times. In the case a cover 13 is arranged on the bale top,provided with an edge 14, the way preferred by the air flow which involves the bale from bottom, is represented by dashed line in Fig. 3. It is apparent that the most hay which is placed in the median part of the bale is practically just a bit or not dried. If, at contrary, a plate 8 is placed on the grid 7 (Fig.4), said plate being quite complete, i.e. with no holes and with no particular openings, drying air is allowed to flow according ways different from previous case; said ways are indicated in Fig.4.In the case no cover 13 is arranged on the bale 4, the air flow is deviated by cover and involves especially the bale bottom (excepted the bale part immediately higher on the plate) and also a good portion of hay situated on the bale top. As far as the medial part of the bale is concerned, hay us dried less, even over the fixed limit of 15-16% of humidity. In the case action of cover 13 is combined together with action of complete plate 8 (Fig.5), a better involvement of hay distributed into the bale is evaluated, especially in correspondence of the medial part of the bale. As far as the portion of the bale, which is situated immediately over the plate 8, is concerned, it is not involved by the air flow and fermentation process is starting afterwards, due to the remaining humidity, as soon as drying process is over.

It is necessary to point out the effect of plate 8: drying air, which is fed by fan, comes into the ambient 1 (Fig.1), and it increases pressure in the inside of ambient 1, due to the fact that said air meets with openings 3, which present reduced exit sections; it increases consequently its exit speed through the residual vent of grids 7. Experience proved that just the combined actions of plate 8 and cover 13 are able to produce a drying process, which is substantially uniform in the inside of bale hay, particularly in the portion distributed in correspondence of median height of the bale. In the second place, the amount of air, which preferentially flows along the way where hay is distributed close to the axis of round bale, is decreased. At last, consequently, the output of drying device is increased and time and operation cost are reduced. In case of bales, which are made of especial material (clover or particularly hard hay), use of plates 8 provided with holes 9 is necessary, so that also the portion of bale immediately above said plate 8 is involved. Experimental data obtained in some farms confirmed that, if 3.000 cubic meters of air are necessary for a complete drying process of a bale of 150 cm. base and 120 cm. height, using a plate 8 together with a cover 13, such an amount of air is reduced to about 2.5000 cube meters, and consequently the drying process cost is reduced to about Lit.1.300 each quintal of hay. Energy saving is to be joined to time saving, with the same device output, or to a reduction of device cost, always with the same device output. Indeed, at present time, costs for hay drying process were about around Lit. 1.500-1.600 each quintal of hay. In the case time required for hay drying process is to be reduced, a cover 16 is arranged on the bale 4, said cover 16 being provived with an edge 17; cover 16 is pressed on the bale top, in the manner that edhe 17 pierces onto the inside of bale 4, with its complete height. The result of drying process appears extremely good, especially with not particularly hard hay (see air flow lines of Fig.6), whereas a further advantage is offered by lower cost and easier handling of cover 16 with respect of cover 13, which is heavier and more cumbersome.

At last, it is necessary to point out that, for a better result of drying process, all the amount of air flow is to be utilized, said air being flowing from the ambient 1. This fact requires that the bale bottom is airtight , avoiding that air escapes outside. This is why the external portion od bale bottom leans on surface 2, whereas the the remaing portion, which represents the most bottom of the bale, is resting on the grid 7.

## Claims

1. Device for drying hay, said hay being adapted to appear in the shape of bales (4) with a substantially circular base, the pressure inside said bales being increasing from the inside to the periphery, obtaining in such a way so called soft core bales, said device comprising supporting means with a surface (2) for the drying process of said bales, said supporting means being adapted to belong to an air duct for distributing drying air and being provided with a plurality of openings (3) adapted to be covered by the base, characterized in that the internal part of the base rests on a grid (7) filling a recess (6) formed by the opening (3) and the grid (7) in said opening, while a small external rim portion of the base rests on the surface (2), and in that air flow prevention means (8) are centrally installed in said opening in such a way that drying process involves in a homogeneous way the hay arranged in any part of the bale.

2. Device according to claim 1, wherein said air flow prevention means is a substantially circular plate (8) having a diameter substantially equal to half the diameter of each opening (3).

3. Device according to claim 1, wherein said air flow prevention means is a substantially circular plate (8) provided with a plurality of holes (9) such that also the hay arranged immediately above said plate (8) can be involved by the drying process, in presence of a particularly high humidity of the hay or in presence of a particular quality of the hay.

4. Device according to claim 1, wherein said air flow prevention means is made up of two plates (8), each of them being provided with sectors (11), the first one of said plates being fixed to a grid (7) integral with said supporting means, the second one of said plates being adapted to rotate with respect to said first plate, so that it is possible to adjust the width of said sectors (11) for the adjustment of the amount of drying air through said openings (3).

5. Device according to anyone of the preceding claims, wherein said air flow prevention means (8) are able to cooperate with a cover (13; 16) which is provived with an edge (14; 17) so that the drying air flow can involve the hay arranged in any parts of said bale (4), particularly in the external middle-high part.

6. Device according to claim 5, wherein said cover (13) is substantially circular with a diameter that is a bit greater than the diameter of the bale top.

7. Device according to claim 6, wherein said cover (16) is substantially circular like the bale top and has a diameter substantially smaller than the bale top, such that the edge (17) of the cover (16) penetrates into the bale top.

## Patentansprüche

1. Vorrichtung zum Trocknen von Heu, das in der Form von Ballen (4) mit einer im wesentlichen kreisförmigen Grundfläche vorliegt, wobei der Druck innerhalb der Ballen von innen zur Außenseite hin ansteigt, so daß die Ballen einen weichen Kern aufweisen, wobei die Vorrichtung eine Abstützeinrichtung mit einer Oberfläche (2) für den Trocknungsprozeß der Ballen aufweist und die Abstützeinrichtung so ausgebildet ist, daß sie Teil einer Luftführung zum Verteilen von Trocknungsluft ist und eine Anzahl von Öffnungen (3) hat, die von der Grundfläche abgedeckt werden können, dadurch gekennzeichnet, daß der innere Bereich der Grundfläche auf einem Gitter (7) ruht, das eine Ausnehmung (6) abdeckt, die durch die Öffnung (3) und das Gitter (7) in dieser Öffnung gebildet wird, während ein schmaler, äußerer Randbereich der Grundfläche auf der Oberfläche (2) ruht, und daß Mittel (8) zur Unterbrechung des Luftstromes mittig in dieser Öffnung so angeordnet sind, daß der Trocknungsprozeß in homogener Weise das Heu in jedem Teil des Ballens erfaßt.

2. Vorrichtung nach Anspruch 1, dadurch gekennzeichnet, daß die Mittel zur Unterbrechung des Luftstromes aus einer im wesentlichen kreisförmigen Platte (8) bestehen, deren Durchmesser im wesentlichen der Hälfte des Durchmessers jeder Öffnung (3) entspricht.

3. Vorrichtung nach Anspruch 1, dadurch gekennzeichnet, daß die Mittel zur Unterbrechung des Luftstromes aus einer im wesentlichen kreisförmigen Platte (8) bestehen, die eine Mehrzahl von Löchern (9) hat, so daß auch das unmittelbar über der Platte (8) liegende Heu vom Trocknungsprozeß erfaßt wird, wenn die Feuchtigkeit des Heus besonders hoch ist oder das Heu eine bestimmte Qualität aufweist.

4. Vorrichtung nach Anspruch 1, dadurch gekennzeichnet, daß die Mittel zur Unterbrechung des Luftstromes aus zwei Platten (8) bestehen, von denen jede Sektoren (11) aufweist und von denen die erste an einem Gitter (7) befestigt ist, das mit der Abstützeinrichtung fest verbunden ist, während die zweite Platte relativ zu der ersten Platte drehbar ist, so daß die Breite der Sektoren (11) zur Einstellung der durch die Öffnungen (3) strömenden Trockenluftmenge verändert werden kann.

5. Vorrichtung nach einem der vorhergehenden Ansprüche, dadurch gekennzeichnet, daß die Mittel (8) zur Unterbrechung des Luftstromes mit einem Deckel (13; 16) zusammenarbeiten, der einen Rand (14; 17) hat, so daß der Trockenluftstrom das Heu an jeder Stelle des Ballens (4) erfaßt, insbesondere im äußersten, oberen Mittelteil.

6. Vorrichtung nach Anspruch 5, dadurch gekennzeichnet, daß der Deckel (13) im wesentlichen kreisförmig ist und einen Durchmesser hat, der etwas größer als der Durchmesser der Ballenoberfläche ist.

7. Vorrichtung nach Anspruch 5, dadurch gekennzeichnet, daß der Deckel (16) wie die Ballenoberseite im wesentlichen kreisförmig ist und einen Durchmesser hat, der im wesentlichen kleiner als die Ballenoberseite ist derart, daß der Rand (17) des Deckels (16) in die Ballenoberseite eindringt.

## Revendications

1. Dispositif de séchage de foin, ledit foin étant apte à apparaître sous la forme de bottes (4) à base sensiblement circulaire, la pression à l'intérieur des bottes croissant depuis l'intérieur vers la périphérie, en obtenant de cette manière ce que l'on appelle des bottes à coeur tendre, ledit dispositif comprenant pour le processus de séchage desdites bottes un moyen de support pourvu d'une surface (2), ledit moyen de support étant agencé pour faire partie d'un conduit d'air pour distribuer l'air de séchage et étant pourvu d'une série d'ouvertures (3) aptes à être couvertes par la base, caractérisé en ce que la partie interne de la base repose sur une grille (7) qui remplit un évidement (6) formé par l'ouverture (3) et la grille (7) disposée dans ladite ouverture, tandis qu'une petite partie extérieure de rebord de la base repose sur la surface (2), et en ce que des moyens d'empêchement (8) d'écoulement d'air sont installés au centre de ladite ouverture d'une manière telle que le processus de séchage implique d'une manière homogène le foin disposé dans une partie quelconque de la botte.

2. Dispositif selon la revendication 1, dans lequel ledit moyen d'empêchement d'écoulement d'air est une plaque sensiblement circulaire (8) d'un diamètre sensiblement égal à la moitié du diamètre de chaque ouverture (3).

3. Dispositif selon la revendication 1, dans lequel ledit moyen d'empêchement d'écoulement est une plaque sensiblement circulaire (8) dans laquelle sont ménagés une série de trous (9) d'une manière telle que le foin disposé immédiatement au-dessus de ladite plaque (8) peut lui aussi être impliqué par le processus de séchage, en présence d'une humidité particulièrement élevée du foin ou en présence d'une qualité particulière du foin.

4. Dispositif selon la revendication 1, dans lequel ledit moyen d'empêchement d'écoulement d'air est constitué de deux plaques (8) pourvues chacune de secteurs (11), la première desdites plaques étant fixée à une grille (7) d'un seul tenant avec ledit moyen de support, la deuxième desdites plaques étant apte à tourner par rapport à ladite première plaque d'une manière telle qu'il est possible d'ajuster la largeur dudit secteur (11) pour ajuster la quantité d'air de séchage traversant lesdites ouvertures (3).

5. Dispositif selon l'une quelconque des revendications précédentes dans lequel lesdits moyens d'empêchement (8) d'écoulement d'air peuvent coopérer avec un couvercle (13; 16) qui est pourvu d'un bord (14; 17) d'une manière telle que l'écoulement de l'air de séchage peut impliquer le foin disposé dans l'une quelconque des parties de ladite botte (4), en particulier dans la partie externe située à mi-hauteur.

6. Dispositif selon la revendication 5, dans lequel ledit couvercle (13) est sensiblement circulaire, d'un diamètre légèrement supérieur au diamètre du sommet de la botte.

7. Dispositif selon la revendication 6, dans lequel ledit couvercle (16) est sensiblement circulaire comme le sommet de la botte et son diamètre est sensiblement plus petit que le sommet de la botte d'une manière telle que le bord (17) de la couverture (16) pénètre dans le sommet de la botte.
